# EUROPEAN PATENT APPLICATION

(11) **EP 4 635 804 A1**
(43) Date of publication of application: **22.10.2025**
(21) Application number: 23903343.4
(22) Date of filing: 04.12.2023
(51) Int. Cl.: B60R 21/2334, B60R 21/207

(54) **SIDE AIRBAG DEVICE**

(30) Priority: 16.12.2022 JP 2022200883
(71) Applicant: Autoliv Development AB, 44783 Vargarda (SE)
(72) Inventor: SHIMIZU, Takayuki, Yokohama-shi, Kanagawa 222-8580 (JP); NAKASHIMA, Atsushi, Yokohama-shi, Kanagawa 222-8580 (JP)
(74) Representative: Müller Verweyen
(86) International application number: PCT/JP2023/043296
(87) International publication number: WO 2024/128054

(57) **Abstract**

To provide a side airbag device capable of suitably protecting the head of an occupant. The present invention is a side airbag device stowed in a vehicle seat, comprising: an airbag that expands and deploys to protect an occupant seated in the vehicle seat; and an inflator that supplies expansion gas to the airbag. The airbag includes: a head protection chamber that mainly protects the head of the occupant; a side protection chamber that is located below the head protection chamber and protects the sides of the occupant's body; and a non-expanding part provided around the head protection chamber and the side protection chamber. The rear end part of the head protection chamber is located more forward than the rear end part of the side protection chamber. An upper securing apparatus is provided for securing an upper part of the non-expanding part to the vehicle seat. A slit is formed between the head protection chamber and the upper securing apparatus, extending downward from the upper end of the non-expanding part.

## Description

### TECHNICAL FIELD

The present invention relates to a side airbag device that is stowed in the side of a vehicle seat. In particular, the present invention relates to an improvement to a side airbag device equipped with a head protection chamber.

### BACKGROUND ART

Providing a vehicle with one or a plurality of airbag devices in order to protect an occupant therein in the event of a vehicle accident is well known. There are various forms of airbag devices, such as so-called driver airbag devices that deploy from near the center of a steering wheel to protect a driver, curtain airbags that deploy downward inside a window to protect an occupant in the event of a lateral impact, rollover, or overturning accident, side airbag devices that are deployed to a side of an occupant (side of a seat) to protect the occupant in the event of a lateral impact of the vehicle, and the like. The present invention relates to a side airbag device provided in a vehicle seat.

As disclosed in Patent Document 1, a side airbag device has been proposed that includes a head protection chamber for protecting the head in addition to a chamber for protecting the shoulders, abdomen, and waist of an occupant.

However, in a conventional side airbag device, if the door penetrates too far into the interior of the vehicle during a side collision, the occupant's head may collide with the door trim through the airbag, resulting in a so-called "bottoming out" condition, which may result in the occupant's head not being adequately protected.

### RELATED ART DOCUMENTS

### PATENT DOCUMENTS

Patent Document 1: Japanese Unexamined Patent Application Publication 2022-110958

### SUMMARY OF THE INVENTION

### PROBLEM TO BE SOLVED BY THE INVENTION

In light of the conditions described above, an object of the present invention is to provide a side airbag device that can appropriately protect the head of the occupant.

### MEANS FOR SOLVING THE PROBLEM

To resolve the problem described above, the present invention is a side airbag device stowed in a vehicle seat, comprising: an airbag that expands and deploys to protect an occupant seated in the vehicle seat; and an inflator that supplies expansion gas to the airbag. The airbag includes a head protection chamber that mainly protects the head of the occupant; a side protection chamber that is located below the head protection chamber and protects the sides of the occupant's body; and a non-expanding part provided around the head protection chamber and the side protection chamber. The rear end part of the head protection chamber is located more forward than the rear end part of the side protection chamber. An upper securing apparatus is provided for securing an upper part of the non-expanding part to the vehicle seat. A slit is formed between the head protection chamber and the upper securing apparatus, extending downward from the upper end of the non-expanding part.

Here, a "vehicle seat" refers to a seat in a vehicle such as an automobile, bus, or truck, and can be applied to both a type in which the seat back and headrest are separate and a type in which the seat back and headrest are integrated.

The "side of the body" of an occupant may refer to an area including the shoulders, abdomen, and lower back, but may also refer to an area including the shoulders and abdomen excluding the lower back, or only the shoulders.

The "non-expanding part" is a region into which expansion gas does not flow, unlike a chamber formed into a bag shape by the base fabric that constitutes the airbag.

The rear end part of the head protection chamber is located more forward than the rear end part of the side protection chamber, which means that the head protection chamber is located displaced (offset) forward with respect to the side protection chamber.

"Between the head protection chamber and the upper securing apparatus" refers to the area behind the head protection chamber and in front of the upper securing apparatus. Furthermore, "extending downward" does not necessarily mean extending vertically, but may also include extending at an angle or being bent or curved.

Additionally, the term "slit" includes a simple cut formed by cutting and a gap with a certain width. The width of the slit may be the same over the entire length thereof or may be V-shaped, in which case the width of the gap changes along the way.

In the present invention as described above, the rear end part of the head protection chamber is located more forward than the rear end part of the side protection chamber, so that when the airbag expands and deploys, the head protection chamber is likely to deploy in front of the seat belt without getting between the seat belt and the occupant. In addition, a slit extending downward from the upper end of the non-expanding part is formed between the head protection chamber and the upper securing apparatus, so that the head protection chamber and the upper securing apparatus are separated when the airbag deploys. This allows the head protection chamber to be deployed with a certain degree of freedom in the front-to-back and left-to-right directions without being strongly drawn to the upper securing apparatus. As a result, the head protection chamber deploys in an upright position in front of the seat belt (on the door side in the case of a near-side seat belt). This increases the area over which the occupant's head can be protected, ensuring that the occupant's head is reliably restrained. In addition, when the head of the occupant enters the head protection chamber, the head protection chamber is pushed toward the door trim, and the reaction force of the door trim can be utilized, enabling stable protection of the head of the occupant.

Note that "separate" here does not mean complete physical separation, but rather means that above the connection with the side protection chamber, the head protection chamber has increased freedom to move in a direction away from the seat without being pulled by the upper securing apparatus.

The slit can be formed so as to extend below the securing point of the upper securing apparatus.

By extending the slit below the upper securing point, the head protection chamber is pulled toward the upper securing apparatus (rearward), ensuring separation.

The slit may extend to near the top end of the side protection chamber.

By extending the slit up to the vicinity of the upper end of the side protection chamber, the effect of the slit in reliably separating the head protection chamber can be maximized.

The lower end part of the slit may be bent forward. When this manner of configuration is used, the deployment behavior (movable range) of the head protection chamber can be adjusted. For example, by forming a recessed region facing forward in the rear portion of the head protection chamber and inserting the lower end part of the slit into this recessed region, the head protection chamber can be readily deployed in an upright direction without bending significantly toward the occupant's head (seat side) in the left-to-right direction. In other words, the same effect can be obtained as when the slit is extended deeper downward, enabling the head protection chamber to be deployed with greater freedom relative to the upper securing apparatus.

The upper securing apparatus may be positioned in the vicinity of the shoulders of a normally seated occupant.

For example, the upper securing apparatus may be connected to a portion of the upper edge of the seat back. In the case of a seat in which the seat back and headrest are integrated, the securing tab can be connected near the side of the portion that corresponds to the headrest.

The occupant may correspond to an AM50 dummy as specified in the National Highway Traffic Safety Administration standard. Also, the occupant may be made to correspond to a dummy such as AF05.

In a flat condition prior to expansion and deployment, the head protection chamber extends in a direction curved relative to the longitudinal direction of the side protection chamber. In other words, when viewed from the side in the vehicle width direction in a deployed state without any external force being applied, the head protection chamber may be shaped so as to extend in a direction that is close to vertical while being curved relative to the longitudinal direction of the side protection chamber provided along the side frame of the seat.

Here, "extending in a curved direction" may include a shape extending in a straight line as well as a shape extending in a curved shape, and the chamber as a whole is preferably gently bent so as to bend toward the rear of the seat.

By bending the head protection chamber relative to the longitudinal direction of the side protection chamber, the upper part of the head protection chamber is positioned further forward (away from the seat back), thereby reliably securing the restraint area of the head protection chamber in front of the seat belt.

The side protection chamber may include a side rear region that extends mainly along the side of the seat, and a side front region that is located in front of the side rear region and is formed continuously below the head protection chamber.

The inflator may be stowed within the side rear region of the side protection chamber.

In addition to the upper securing apparatus, a lower securing apparatus for securing the airbag to the seat may be provided near a lower end of the non-expanding part.

The airbag can be configured so that the length from the upper securing apparatus to the lower securing apparatus is longer than the length from the upper securing point on the seat side to which the upper securing apparatus is connected to the lower securing point on the seat side to which the lower securing apparatus is connected.

By adopting this manner of configuration, when the airbag is stowed in the seat, there is space in the longitudinal direction of the airbag between the upper securing apparatus and the lower securing apparatus, and the head protection chamber is not strongly pulled towards the side protection chamber when the airbag is deployed. Therefore, when the head of an occupant enters the head protection chamber, the lower part of the head protection chamber is reliably bent, making it easier for the head protection chamber to ride up onto the upper part of the door trim.

When the airbag is deployed, a sewn part can be formed in a portion of the side protection chamber that corresponds to a portion above the upper end part of the door trim, partially connecting the left and right panels that constitute the side protection chamber.

By forming the sewn part described above, the expanded and deployed head protection chamber is more likely to bend starting from the sewn part. Therefore, when the head of an occupant enters the head protection chamber, the lower part of the head protection chamber is reliably bent, making it easier for the head protection chamber to ride up onto the upper part of the door trim.

When the airbag is set in a stowed state, the head protection chamber can be folded vertically and then rolled together with the side protection chamber. Alternatively, the head protection chamber and the head protection chamber of the airbag can be rolled, and then the side protection chamber can be folded vertically.

Here, "folded" includes folding methods such as folding in an accordion shape and folding in a Z shape. Since the head protection chamber is not rolled in the vertical direction but is simply folded, the head protection chamber can be deployed upwards rapidly.

Note that in description of the present invention, when an occupant is seated in a seat in a normal posture, the direction the occupant faces is referred to as the "front", the opposite direction is referred to as the "rear", and the direction indicating the coordinate axis is referred to as the "front-rear direction". Moreover, when the occupant is seated in the seat in a regular posture, the right of the occupant is referred to as the "right direction", the left of the occupant is referred to as the "left direction", and the direction indicating the coordinate axis is referred to as the "left and right direction". Furthermore, when the occupant is seated in the seat in a regular posture, a head direction of the occupant is referred to as "up", a waist direction of the occupant is referred to as "down", and a direction indicating the coordinate axis is referred to as an "up-down direction".

### BRIEF DESCRIPTION OF THE DRAWINGS

FIG. 1 is a perspective view depicting mainly the appearance form of a vehicle seat to which a side airbag device according to the present invention can be applied, and the depiction of the airbag device is omitted;
FIG. 2 is a perspective view depicting an internal structure (seat frame) functioning as a framework of the vehicle seat depicted in FIG. 1, with depiction of the airbag device omitted;
FIG. 3 is a schematic side surface view of the side airbag device according to the present invention, depicting a condition where the airbag device is stowed therein, as viewed from the outside in the vehicle width direction;
FIG. 4A is a plan view depicting a configuration of an airbag device according to an embodiment of the present invention;
FIG. 4B is a plan view depicting a configuration of an airbag device according to Modified Example 1 of the embodiment of the present invention;
FIG. 4C is a plan view depicting a configuration of an airbag device according to Modified Example 2 of the embodiment of the present invention;
FIG. 5 is an explanatory diagram depicting a securing position (corresponding relationship) of an airbag according to the embodiment of the present invention with respect to a side frame;
FIG. 6(A) and 6(B) are schematic front views depicting an attached state of the airbag according to the embodiment of the present invention;
FIG. 7(A) and 7(B) are plan views depicting a process of compressing the airbag according to the embodiment of the present invention into a stowed state;
FIG. 8(A) and 8(B) are plan views depicting a process of compressing the airbag according to the embodiment of the present invention into a stowed state;
FIG. 9(A) and 9(B) are front views depicting the deployment behavior of the airbag according to the embodiment of the present invention, in which (A) depicts a state before the airbag is deployed, and (B) depicts a state after the airbag is deployed;
FIG. 10(A) is a plan view depicting a structure in which the length of a slit is increased in an airbag according to the embodiment of the present invention, and FIG. 10(B) is a front view depicting the deployed state of the airbag;
FIG. 11(A) is a plan view depicting a structure in which the length of a slit is reduced in an airbag according to the embodiment of the present invention, and FIG. 11(B) is a front view depicting the deployed state of the airbag; and
FIG. 12(A) and 12(B) are plan views depicting the structure of an airbag according to another embodiment of the present invention.

### EMBODIMENTS OF THE INVENTION

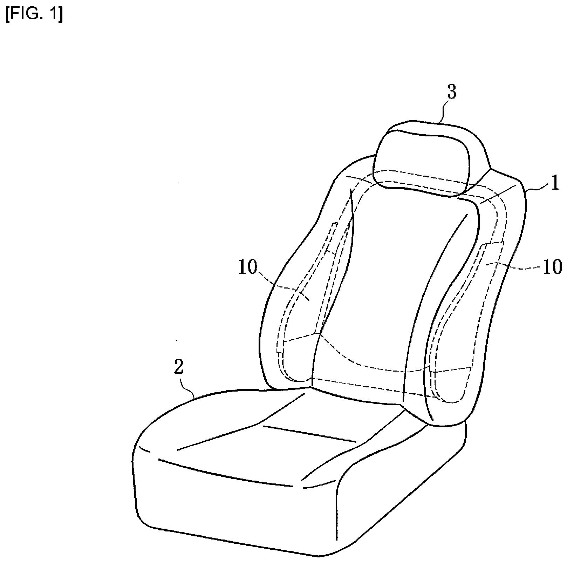

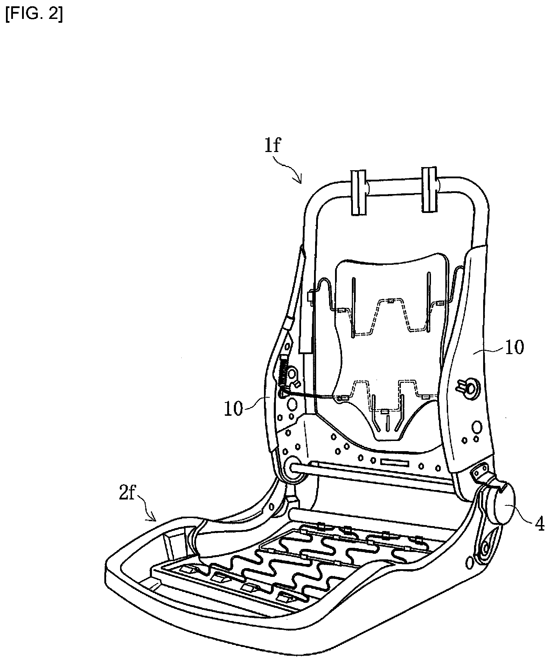

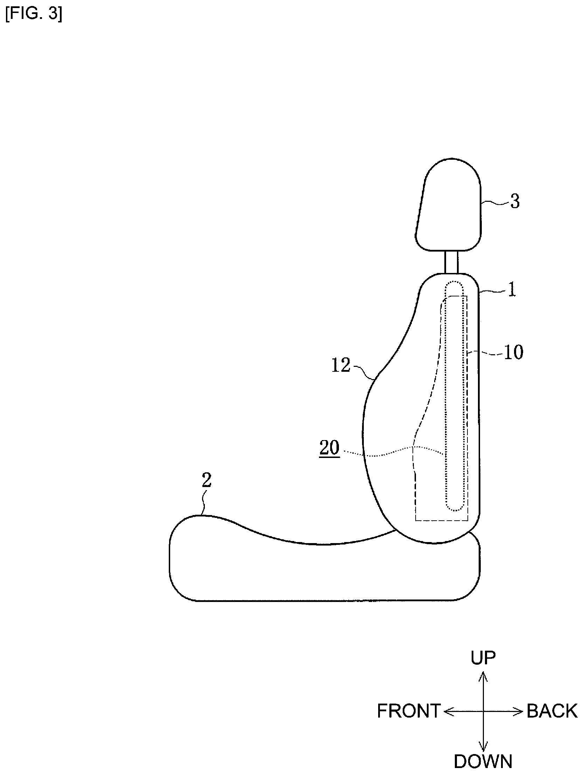

FIG. 1 is a perspective view mainly depicting the external shape of a vehicle seat used for an occupant protection device according to the present invention, with depiction of the airbag device (20) omitted. FIG. 2 is a perspective view depicting an internal structure (seat frame) functioning as a framework of the vehicle seat depicted in FIG. 1, with depiction of the airbag device (20) also omitted herein. FIG. 3 is a schematic side view of the occupant protection device according to the present invention, depicting the state in which the airbag device 20 is stowed on the side (near side) of a vehicle seat close to the door, as viewed from the vehicle width direction (in other words, left and right direction).

As depicted in FIGS. 1 and 2, seen as the location, the vehicle seat to which the present invention can be applied includes: a seat cushion 2 of a part on which an occupant is seated, a seat back 1 forming a backrest, and a headrest 3 connected to the upper end of the seat back 1.

A seat back frame 1f that forms the framework of the seat is provided inside a seat back 1, a pad made of urethane foam or the like is provided on the surface and periphery thereof, and the surface of the pad is covered by a cover 12 (FIG. 3), such as leather or fabric. A seating frame 2f is provided on the bottom side of the seat cushion 2, while a pad composed of a urethane foam material or the like is provided on the upper surface and periphery thereof, and the surface of this pad is covered with a cover 12 (FIG. 3) such as leather or fabric. The seating frame 2f and the seatback frame 1f are connected via a reclining mechanism 4.

As depicted in FIG. 2, the seat back frame 1f is configured into a frame shape by side frames 10 disposed laterally spaced apart and extending in the vertical direction, an upper frame connecting the upper ends of the side frames 10, and a lower frame connecting the lower ends thereof. As depicted in FIG. 3, the headrest 3 is formed by providing a cushion member on the outside of the headrest frame.

### EMBODIMENTS

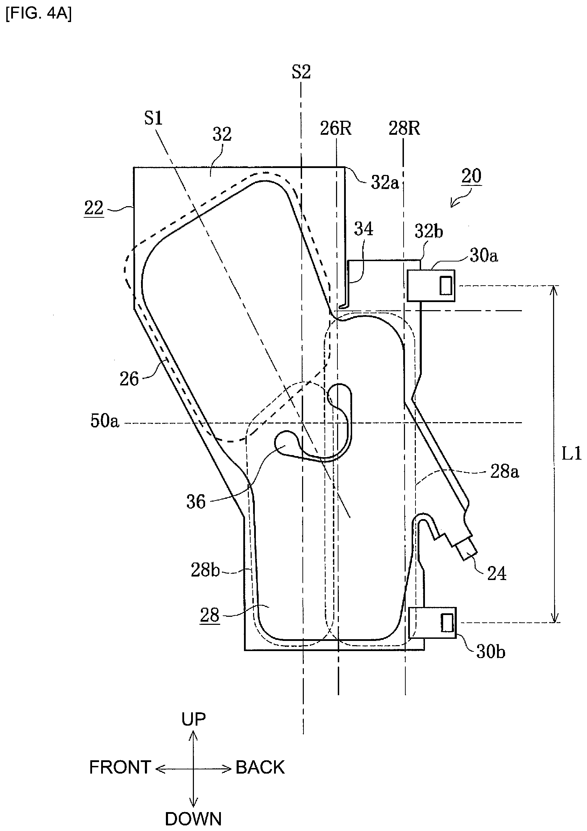

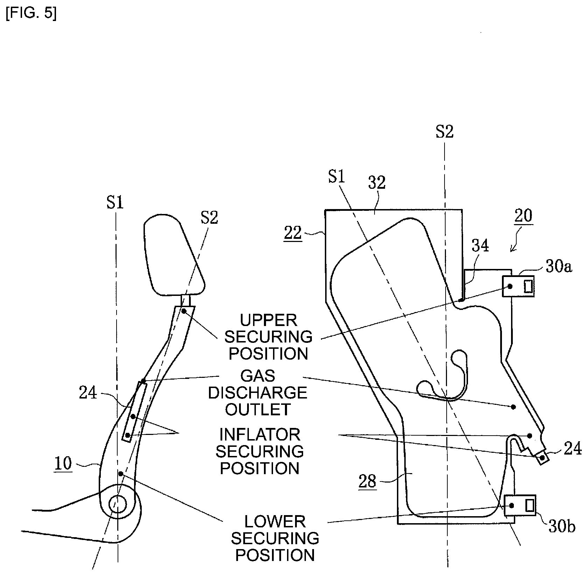

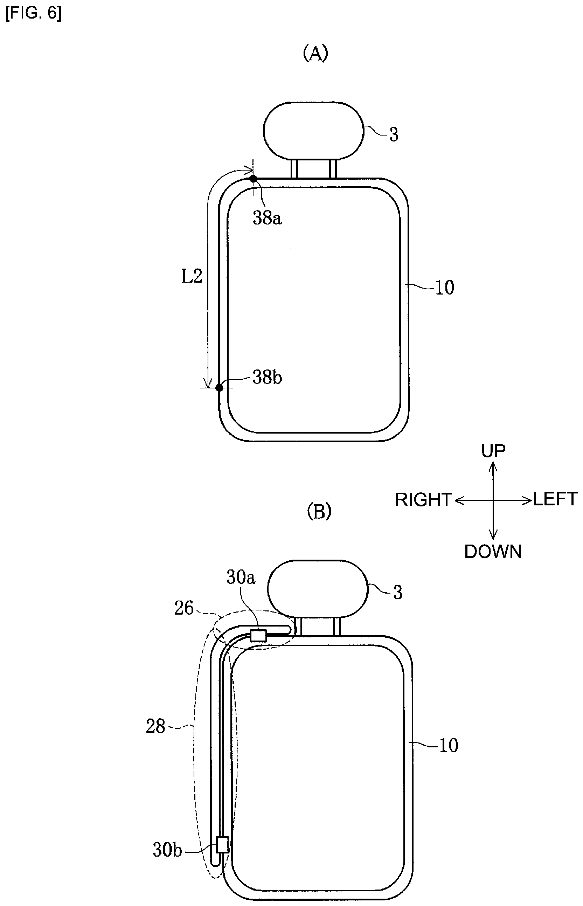

FIG. 4A is a plan view depicting a configuration of an airbag device according to an embodiment of the present invention. FIG. 6A and 6B are schematic front views depicting the attached state of the airbag 22. FIG. 5 is an explanatory diagram depicting the securing position (corresponding relationship) of the airbag 22 with respect to the side frame 10.

The airbag device 20 according to the present embodiment is a side airbag device stowed in a vehicle seat, and includes an airbag 22 that expands and deploys to protect an occupant seated in the vehicle seat, and an inflator 24 that supplies expansion gas to the airbag 22.

The inflator 24 may be a cylindrical type inflator, and a streamlining panel for controlling the flow of gas may be provided around the inflator.

### (Chamber Configuration)

The airbag 22 includes a head protection chamber 26 that mainly protects the head of the occupant; a side protection chamber 28 that is located below the head protection chamber 26 and protects the sides of the occupant's body; and a non-expanding part 32 that is provided around the head protection chamber 26 and the side protection chamber 28. The head protection chamber 26 and the side protection chamber 28 are integrally (continuously) formed.

Here, the rear end part 26R of the head protection chamber 26 is located more forward than the rear end part 28R of the side protection chamber 28. This can also be expressed as the head protection chamber 26 and the side protection chamber 28 not being formed so as to completely overlap each other vertically, but rather the center line (S1) extending in the vertical direction of the head protection chamber 26 being angled (bent) relative to the longitudinal direction of the side protection chamber 28.

As depicted in FIG. 4A and FIG. 5, when the head protection chamber 26 is viewed from the side in the vehicle width direction in an unfolded state, the longitudinal direction thereof extends in a direction S1 that is curved relative to the longitudinal direction S2 of the side protection chamber 28 provided along the side frame 10 of the seat, and has a shape that extends substantially vertically. In other words, the longitudinal deployment direction S1 of the head protection chamber 26 is inclined with respect to the longitudinal direction S2 of the side protection chamber 28 of the airbag 22.

The side protection chamber 28 includes a side rear region 28a that deploys mainly along the side of the seat, and a side front region 28b that is located in front of the side rear region 28a and is formed continuously below the head protection chamber 26. The inflator 24 is stowed inside the side rear region 28a.

### (Securing Apparatus).

An upper securing apparatus 30a for securing the airbag 22 to the vehicle seat is provided at an upper rear end part of the non-expanding part 32. Further, a lower securing apparatus 30b for securing the airbag 22 to the seat is provided at the lower end of the non-expanding part 32.

The upper securing apparatus 30a may be positioned in the vicinity of the shoulders of a normally seated occupant. Here, the "occupant" may correspond to an AM50 or AF05 dummy defined in the National Highway Traffic Safety Administration standard.

The upper securing apparatus 30a may be connected to a part of the upper edge of the seat back. In the case of a seat in which the seat back and headrest are integrated, a securing tab 30a can be connected near the side of the portion that corresponds to the headrest.

The length L1 from the upper securing apparatus 30a to the lower securing apparatus 30b is configured to be longer than a length L2 from an upper securing point 38a on the seat side to which the upper securing apparatus 30a is connected to a lower securing point 38b on the seat side to which the lower securing apparatus 30b is connected.

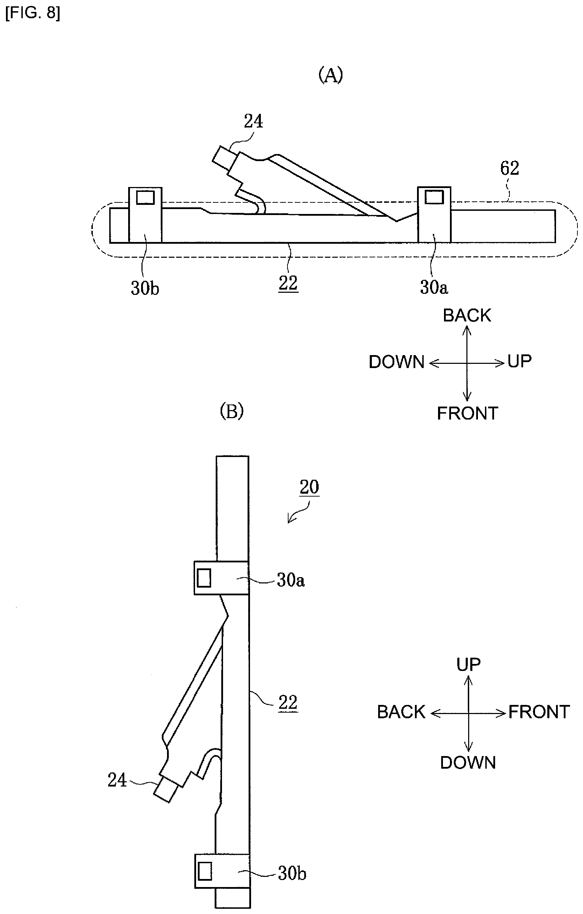

Note that while FIG. 5 depicts the securing position of the airbag 22 and inflator 24 in a flat state on the side frames 10, in actuality, the airbag 22 is secured to the side frames 10 in the compressed state indicated in FIG. 8.

### (Slit)

A slit 34 extending downward from an upper end of the non-expanding part 32 is formed between the head protection chamber 26 and the upper securing apparatus 30a. The lower end of the slit 34 is below the upper securing apparatus 30a and extends to near the upper end of the side protection chamber 28. According to another example, the lower end of the slit 34 may be below the securing point 38a.

Note that the slit 34 may be a simple cut formed by cutting, or a gap with a certain width. The width of the slit may be the same over the entire length thereof, or may be V-shaped, in which case the width of the gap may change along the way.

### (Sewn Part)

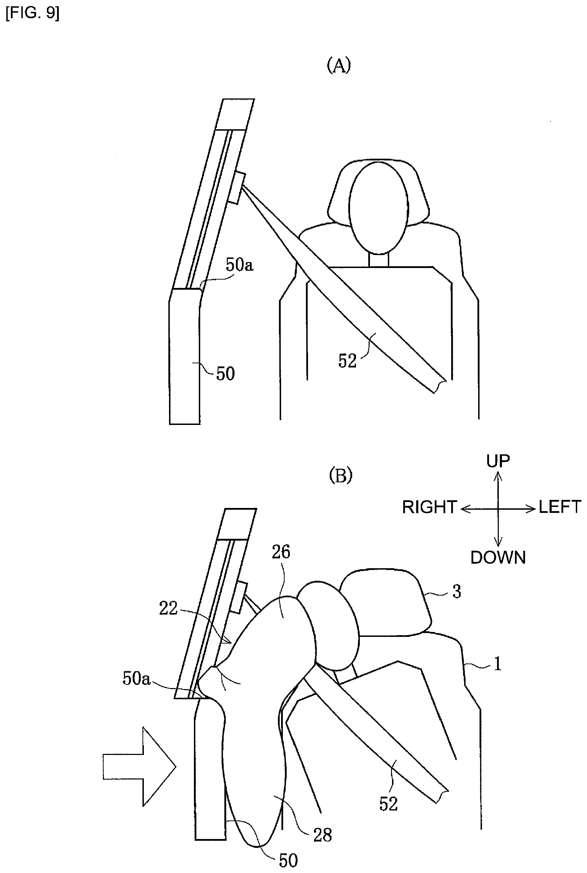

As depicted in FIG. 4A, when the airbag 22 is deployed, a sewn part 36, formed at a point in the side protection chamber 28 corresponding to a portion above an upper end part 50a (FIG. 9) of a door trim 50, is partially connecting left and right panels that constitute the side protection chamber 28.

### (Non-Expanding Part)

A supplemental explanation of the non-expanding part 32 is as follows. The airbag 22 of the airbag device of the present embodiment includes a non-expanding part 32 provided around the head protection chamber 26 and the side protection chamber 28. Here, "provided around" does not necessarily mean being provided around the entire circumference of the head protection chamber 26 and the side protection chamber 28, but also includes the case of being provided only around a part of the circumference of the head protection chamber 26 and the side protection chamber 28. For example, with the present embodiment, an upper securing apparatus 30a that secures the airbag 22 to the vehicle seat is attached to the upper rear end part of the non-expanding part 32, and a lower securing apparatus 30b that secures the airbag 22 to the vehicle seat is attached to a lower rear end part of the non-expanding part 32. In this case, the non-expanding part 32 at least has an area near the rear end part of the non-expanding part 32 where the upper securing apparatus 30a and the lower securing apparatus 30b can be attached, and is located in a position where the airbag 22 can be secured to the side frame 10 of the vehicle seat using the upper securing apparatus 30a and the lower securing apparatus 30b.

With the present embodiment, as depicted in FIG. 4A, the upper rear end 32a of the non-expanding part 32 and the rear end upper part 32b of the non-expanding part 32 are not directly connected, and the non-expanding part 32 is cut out in a stepped shape at the upper and rear corner of the airbag 20. However, the shape of the non-expanding part 32 is not limited to that indicated in the present embodiment. The rear end part of the non-expanding part 32 may be shaped to extend straight upward from near the rear end of the upper end part of the side protection chamber 28. The upper end part of the non-expanding part 32 may be shaped to extend straight rearward from near the upper edge of the head protection chamber 26. The non-expanding part 32 may not have a stepped cutout, and the non-expanding part 32 may be located at an upper rear corner of the airbag 20.

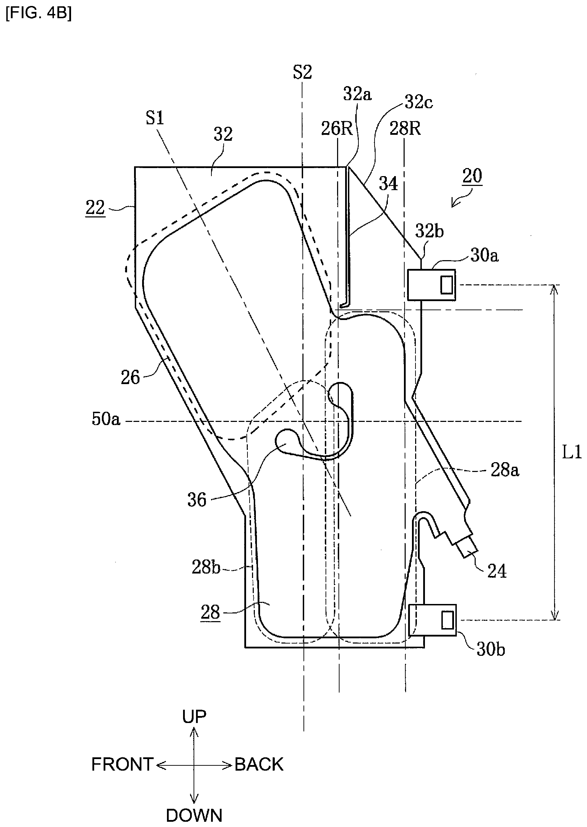

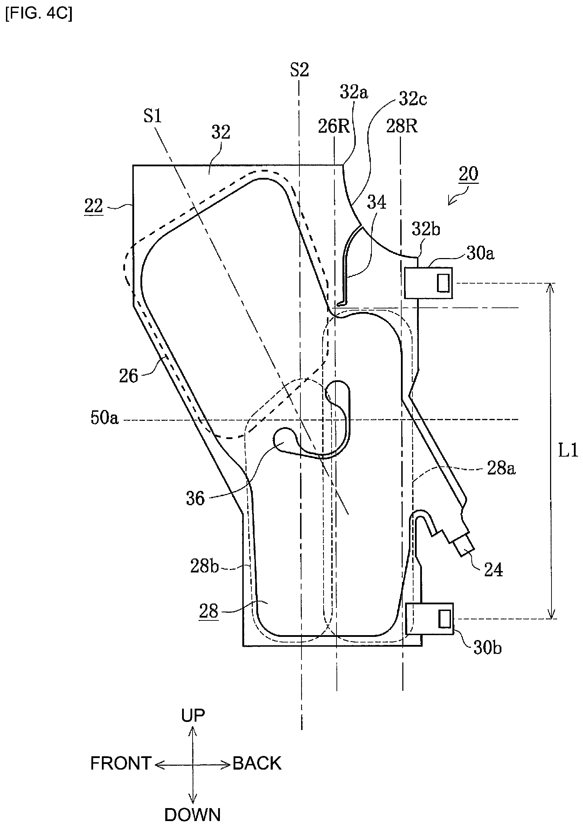

The end of the non-expanding part 32 at the upper rear corner of the airbag 20 may be configured such that the upper rear end 32a and the rear end upper part 32b of the non-expanding part 32 are continuously connected, as depicted in FIG. 4B and FIG. 4C.

Specifically, with the non-expanding part 32 of Modified Example 1, the upper rear end 32a and the rear end upper part 32b of the non-expanding part 32 are continuous in a straight line, forming a straight oblique side 32c. In Modified Example 1, the slit 34 is formed facing downward from the upper rear end 32a of the non-expanding part 32 between the head protection chamber 26 and the upper securing apparatus 30a, and the lower end of the slit 34 extends below the upper securing apparatus 30a to near the upper end of the side protection chamber 28.

In the non-expanding part 32 of Modified Example 2, the upper rear end 32a and the rear end upper part 32b of the non-expanding part 32 are continuous in a curved shape, and an inwardly curved oblique side 32c is formed. In Modified Example 2, the slit 34 is bent toward the oblique side 32c at a position slightly above the upper end of the upper securing apparatus 30a, and the upper end of the slit 34 intersects with the oblique side 32c.

### (Airbag Compression Process)

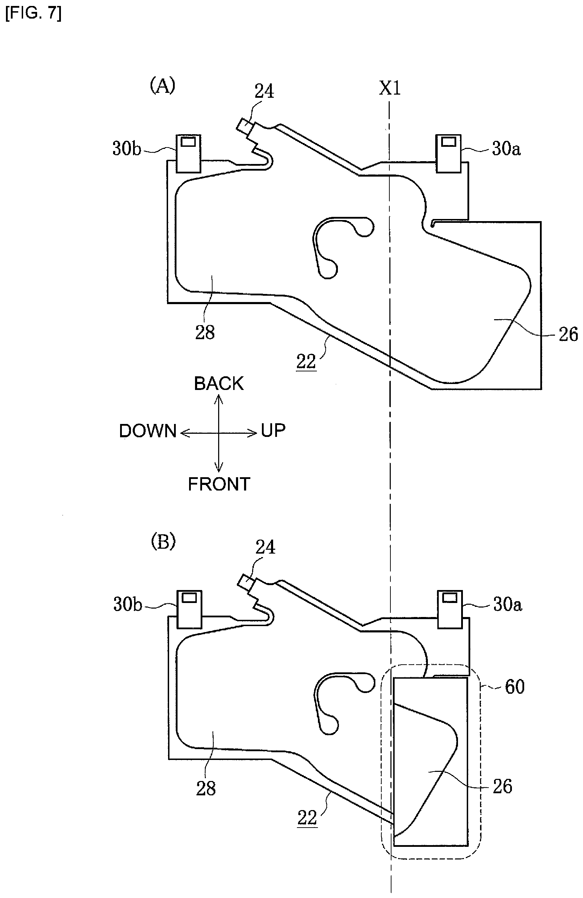

FIG. 7(A), 7(B) and FIG. 8(A), 8(B) are plan views depicting the process of compressing the airbag according to the embodiment of the present invention into a stowed state.

When the airbag 22 is brought into a stowed state from the flat state depicted in FIG. 7(A), the head protection chamber 26 is first folded in a Z-shape along the folding line X1 to form a folded part 60 as depicted in FIG. 7(B). The folded part 60 can be formed by folding in a bellows pattern in addition to folding in a Z pattern.

Next, the folded part 60 and the side protection chamber 28 are rolled in a direction perpendicular to the longitudinal direction (vertical direction in the figure) to form a rolled part 62 as depicted in FIG. 8(A). This is then turned so that the longitudinal direction is in the up-down direction as depicted in FIG. 8(B), and then stowed and secured in the seat.

In the example described above, the head protection chamber 26 is folded in a Z-fold and then rolled, but it is also possible to roll the entire airbag 22 in a direction perpendicular to the longitudinal direction and then Z-fold or accordion-fold the portion corresponding to the head protection chamber 26.

### (Airbag Deployment)

FIG. 9(A) and 9(B) are front views depicting the deployment behavior of the airbag 22 according to the embodiment of the present invention, in which (A) depicts a state before the airbag is deployed, and (B) depicts a state after the airbag is deployed.

When a vehicle side collision or the like occurs and the airbag device 20 is activated, the expansion gas from the inflator 24 flows into the entire airbag 22 from the rear region 28a of the side protection chamber 28. When the airbag 22 begins to expand, the side protection chamber 28 deploys forward, and the head protection chamber 26 deploys upward and forward.

As depicted in FIG. 4A, since the rear end part 26R of the head protection chamber 26 is located forward of the rear end part 28R of the side protection chamber 28, the head protection chamber 26 deploys in front of a seat belt 52 without getting between the seat belt 52 and the occupant.

Furthermore, since the head protection chamber 26 and the upper securing apparatus 30a are separated by the slit 34, the head protection chamber 26 is not strongly drawn towards the seat, but is able to deploy with a certain degree of freedom in the front-to-back and left-to-right directions. As a result, the head protection chamber 26 deploys in such a way that it stands upright and is spaced apart from the outer periphery of the seat in front of the seat belt 52.

As depicted in FIG. 9(B), when the head of the occupant enters the head protection chamber 26, the head protection chamber 26 is pushed toward the door trim 50 and a part of the head protection chamber 26 rides up onto the upper part 50a of the door trim 50, and receives a reaction force therefrom.

**In** this manner, with regard to the behavior of the head protection chamber 26 riding up on the upper part 50a of the door trim 50, it is effective to make the length L1 from the upper securing apparatus 30a to the lower securing apparatus 30b of the airbag 22 longer than the length L2 between the securing positions 38a, 38b on the seat side, as depicted in FIG. 4A and FIG. 6. In other words, a space is provided in the longitudinal direction of the airbag 22 between the securing positions 38a, 38b, and the head protection chamber 26 is no longer strongly drawn toward the side protection chamber 28 when the airbag 22 is deployed. Therefore, when the head of an occupant enters the head protection chamber 26, the lower part of the head protection chamber 26 is reliably bent, making it easier for the head protection chamber 26 to ride up onto the upper part 50a of the door trim 50.

Furthermore, as depicted in FIG. 4A, by forming the sewn part 36 near the upper part 50a of the door trim 50, the lower portion of the head protection chamber 26 bends starting from the sewn part 36, making it easier for the bent portion to ride up onto the upper part 50a of the door trim 50.

### (Adjusting the Slit Depth)

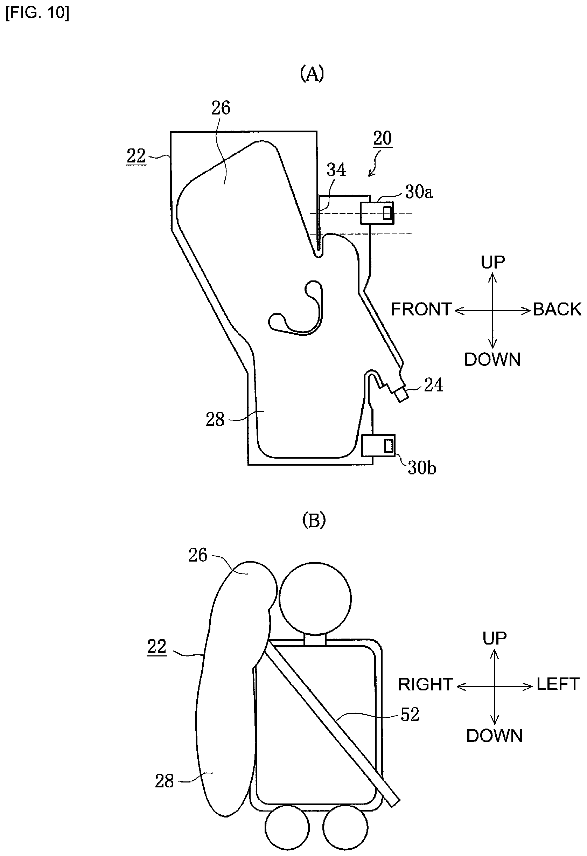

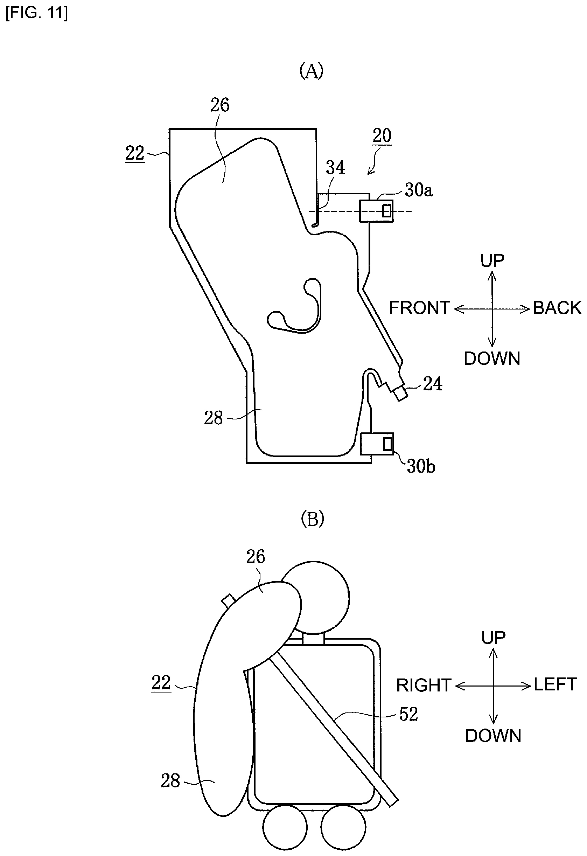

FIG. 10(A) is a plan view depicting a structure in which the length of a slit is increased in an airbag according to the embodiment of the present invention, and FIG. 10(B) is a front view depicting the deployed state of the airbag. FIG. 11(A) is a plan view depicting a structure in which the length of a slit is reduced in an airbag according to the embodiment of the present invention, and FIG. 11(B) is a front view depicting the deployed state of the airbag.

As depicted in FIG. 10(A), if the slit 34 is extended downward relatively far, that is, if the slit is extended so as to enter the area near the upper part of the rear region of the side protection chamber, when the airbag 22 deploys, the upper securing apparatus 30a and the head protection chamber 26 will be separated over a wide area in the vertical direction. As a result, as shown in Figure 10(b), the head protection chamber 26 will expand to an upward erected position. In this case, the area (restraint area) of the head protection chamber 26 that comes into contact with the head of the occupant becomes larger, making it possible to more reliably restrain the head of the occupant.

On the other hand, if the slit 34 is made relatively short as depicted in FIG. 11(A), that is, if the slit extends within the range of the height of the upper securing part 30a, when the airbag 22 deploys, the upper securing part 30a and the head protection chamber 26 are separated only over a narrow area. As a result, as depicted in FIG. 11(B), the head protection chamber 26 is deployed in a state of being tilted toward the occupant and aligned with the upper surface of the seat back. In this case, the area (restraint area) of the head protection chamber 26 that comes into contact with the occupant's head becomes relatively small.

As described above, with the present invention, the deployment direction of the head protection chamber 26 can be controlled by adjusting the vertical depth of the slit 34.

### (Additional Embodiments)

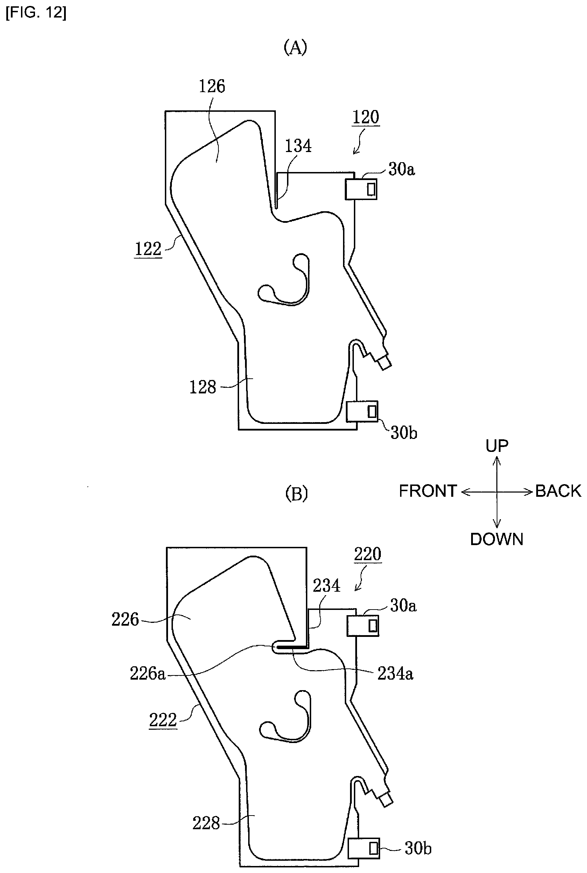

FIG. 12(A) and 12(B) are plan views depicting the structure of an airbag according to another embodiment of the present invention.

An airbag device 120 according to the embodiment depicted in FIG. 12(A) employs an airbag 122 in which a head protection chamber 126 is shifted forward with respect to a side protection chamber 128. Compared to the slit 34 in the embodiment described above, the slit 134 is moved forward. When the airbag 122 is expanded and deployed, the head protection chamber 126 deploys further forward.

An airbag device 220 according to the embodiment depicted in Figure 12(B) has an airbag 222 having a head protection chamber 226 and a side protection chamber 228, and a recess part 226a extending in the front-to-back direction is formed at the rear end part of the head protection chamber 226 near the boundary with the side protection chamber 228. Furthermore, the slit 234 has a lower end part 234a that extends forward along the recess part 226a. According to the present embodiment, the head protection chamber 226 can be easily deployed in an upright direction without being significantly bent toward the head of the occupant (seat side). In other words, the same effect can be obtained as when the slit is extended deeper downward, and the head protection chamber 226 can be deployed with greater freedom in terms of position in the left-to-right direction and angle of deployment relative to the upper securing apparatus 30a.

While the present invention has been described with reference to the abovementioned illustrative embodiments, many equivalent changes and variations will be obvious to a person of ordinary skill in the art from the present disclosure. Therefore, the abovementioned illustrative embodiments of the present invention are presumably illustrative and not limiting. Without departing from the spirit and scope of the present invention, the described embodiments may take on various modifications. For example, while a side airbag on the near side has been predominantly mentioned in the Description of the Preferred embodiment, use is also possible with a far side airbag (surface on the far side from a vehicle door of a vehicle seat), in very small vehicles such as a single seat vehicle (irrespective of the presence of a door, a vehicle including parts with only one seat in a single row), and the like.

### DESCRIPTION OF REFERENCE NUMERALS

- 20.: Airbag device

- 22.: Airbag
- 24.: Inflator
- 26.: Head protection chamber
- 26R.: Rear end part
- 28.: Side protection chamber
- 28R.: Rear end part
- 30a.: Upper securing apparatus
- 30b.: Lower securing apparatus
- 32.: Non-expanding part
- 34.: Slit
- 36.: Sewn part

## Claims

1. A side airbag device stowed in a vehicle seat, comprising
an airbag that expands and deploys to protect an occupant seated in the vehicle seat; and
an inflator that supplies expansion gas to the airbag, wherein
the airbag includes a head protection chamber that mainly protects a head of the occupant; a side protection chamber that is located below the head protection chamber and protects the sides of the body of the occupant; and a non-expanding part provided around the head protection chamber and the side protection chamber,
a rear end part of the head protection chamber is located more forward than a rear end part of the side protection chamber, an upper securing apparatus is provided to secure an upper part of the non-expanding part to the vehicle seat, and
a slit extending downward from an upper end of the non-expanding part is formed between the head protection chamber and the upper securing apparatus.

2. The side airbag device according to claim 1, wherein the slit is formed so as to extend below the securing point of the upper securing apparatus.

3. The side airbag device according to claim 2, wherein the slit extends to the vicinity of an upper end of the side protection chamber.

4. The side airbag device according to claim 3, wherein a lower end part of the slit is bent so as to extend forward.

5. The side airbag device according to any one of claims 1 to 4, wherein the upper securing apparatus is disposed in the vicinity of the shoulder of a properly seated occupant.

6. The side airbag device according to any one of claims 1 to 4, wherein the extension direction of the deployed state of the head protection chamber from the side protection chamber is curved relative to the longitudinal direction of the side protection chamber when viewed from the side in the vehicle width direction.

7. The side airbag device according to any one of claims 1 to 4, wherein the side protection chamber includes: a side rear region that extends mainly along the side of the seat; and a side front region that is located in front of the side rear region and is formed continuously below the head protection chamber.

8. The side airbag device according to claim 7, wherein the inflator is stowed inside the seat side area of the side protection chamber.

9. The side airbag device according to any one of claims 1 to 4, further comprising, in addition to the upper securing apparatus, a lower securing apparatus near a lower end of the non-expanding part for securing the airbag to the seat.

10. The side airbag device according to claim 9, wherein with the airbag, the length from the upper securing apparatus to the lower securing apparatus is configured to be longer than the length from the upper securing point on the seat side to which the upper securing apparatus is connected to the lower securing point on the seat side to which the lower securing apparatus is connected.

11. The side airbag device according to any one of claims 1 to 4, wherein when the airbag is deployed, a sewn part is formed in a portion of the side protection chamber that corresponds to a position above an upper end part of the door trim, partially connecting the left and right panels that constitute the side protection chamber.

12. The side airbag device according to any one of claims 1 to 4, wherein, when the airbag is put into a stowed state, the head protection chamber is folded up and down, and then rolled together with the side protection chamber.

13. The side airbag device according to any one of claims 1 to 4, wherein when the airbag is put in a stowed state, the head protection chamber and the side protection chamber of the airbag are rolled, and then the head protection chamber is folded in the vertical direction.

14. A vehicle seat provided with the side airbag device according to any one of claims 1 to 4.
